# EUROPEAN PATENT SPECIFICATION

(11) **EP 1 929 897 B1**
(45) Date of publication and mention of the grant of the patent: **25.11.2009**
(21) Application number: 07380337.1
(22) Date of filing: 04.12.2007
(51) Int. Cl.: A45C 13/26, B62B 1/12

(54) **Folding handle for shopping trolley**
Klappgriff für Einkaufswagen
Poignée pliable pour chariot de supermarché

(30) Priority: 04.12.2006 ES 200603095
(43) Date of publication of application: 11.06.2008
(73) Proprietor: Germans Server, S.L., 03750 Pedreguer (ES)
(72) Inventor: Server Perez, Juan, 03750 Pedreguer Alicante (ES)
(74) Representative: Ungria Lopez, Javier

(56) References cited:
- EP-A- 1 661 786
- DE-A1- 10 147 400
- DE-U1- 8 809 506
- DE-U1- 29 718 552
- DE-U1-202005 008 145
- US-A- 4 637 626

## Description

### OBJECT OF THE INVENTION

As stated in the title of this descriptive specification, the present invention relates to a folding handle for shopping trolley, which has been especially conceived for comfortably and simply achieving a reduction in the height of the shopping trolley to which it is applied, with the consequent decrease in volume, thus permitting it to be stored in small spaces.

### PRIOR ART OF THE INVENTION

There exist various types of shopping trolley, in some cases having a fixed structure and in others a folding structure, and in all cases with the corresponding bag incorporated in a removable manner.

Many shopping trolleys also incorporate a handle in the form of an inverted "U", such as for example Invention Patent with publication number in United States US4637626 Foss et al. Said handle in the form of an inverted "U" constitutes an upper extension of the support frame for the bag, in such a way that when the handle is fixed it produces a notable increase in the height of the trolley, requiring a space of at least the same height for being able to store it. Nevertheless, the handle can be connected to the frame with the possibility of locating it at a greater or lesser height in order to be adapted adequately to the height of the hand of the person pulling it.

In other cases, the handle is mounted on the frame in a sliding fashion, specifically in telescopic form with respect to the sides of actual frame, permitting it to be retracted in the rest position in order to achieve a reduction in the total height of the trolley, thereby facilitating its storage since it does not need a space with the total height which the trolley acquires when it has the handle extended.

### DESCRIPTION OF THE INVENTION

The trolley forming the object of the invention presents the feature of incorporating a folding handle which permits the problems referred to in the previous section to be overcome since on the basis of the possibility of folding the handle the height of the trolley will find itself reduced to approximately half, with the consequent advantages in terms of storage possibilities.

Moreover, the folding of the handle will be done towards the front of the trolley, specifically on the bag arranged in the corresponding frame, as a result of which the assembly becomes more compacted than in its initial situation, as well as permitting folding without any need to remove the bag.

The folding of the handle is achieved on the basis of a shaft provided as a transverse element between the ends of the side arms of the inverted "U" shaped bridge constituting the handle assembly, all this with the aim that the shaft, which is able to rotate in a certain situation, can allow folding towards the front, with the advantages and features commented on above.

The mechanism permitting the rotation of the shaft and therefore the folding of the handle or for achieving the locking of the latter in its position of use is based on the fact that the actual shaft incorporates a pair of pieces at each of its ends, one of these pieces being regarded as fixed, via which it is coupled to the frame of the trolley, while the other, regarded as mobile, is the one that is attached to the handle and can occupy a locking position with respect to the fixed piece, corresponding to the position of use of the handle. In another position, said mobile piece is released from the fixed piece, permitting rotation of the shaft and therefore folding of the handle, since said mobile piece is coupled to the handle itself.

The locking/unlocking of the two pieces to and from each other is done at each end by means of a toothed wheel which, in the locking position engages at the same time with individual teeth made in both pieces, specifically in teeth provided in the internal surface of casings which the pieces are provided with as they face each other, this toothed wheel being able to be displaced towards the mobile piece against the action of a spring, causing the fixed piece to be released and thereby permitting the shaft to be rotated with its respective mobile piece incorporated into each end.

The displacement of the toothed wheel for its release with respect to the fixed piece is carried out by means of pressing a button provided axially in the end of said fixed piece, in such a way that said pressing of the button entails pushing towards the inside of the toothed piece and with it its release from the fixed piece, becoming housed inside and occupying the entire casing established for the purpose in the mobile piece. With this, the assembly of the latter with the shaft can rotate and therefore fold the handle in order to occupy a folded position when not in use.

Moreover, the fact can be highlighted that the outside of the said shaft presents a cover or surface with projections alternating with recesses which can consist of longitudinal grooves or annular channels adapted to the shape of the fingers, in other words, in order to create a non-slip surface when the actual handle is being gripped, when the latter is in the unfolded position and the trolley needs to be handled or carried suspended or in order to change its position, etc.

### BRIEF DESCRIPTION OF THE DRAWINGS

In order to complement the description that is going to be made forthwith and with the aim of aiding a better understanding of the characteristics of the invention, this descriptive specification is accompanied by a set of plans in which, on an illustrative rather than limiting basis, the following have been represented:

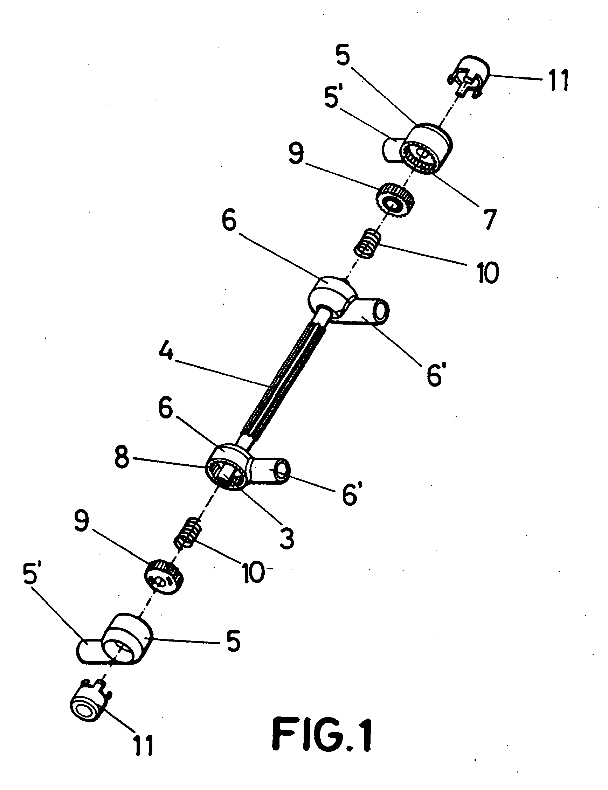

**Figure 1****.-** Shows a representation according to an exploded perspective of the different components or pieces constituting the folding mechanism of the handle.

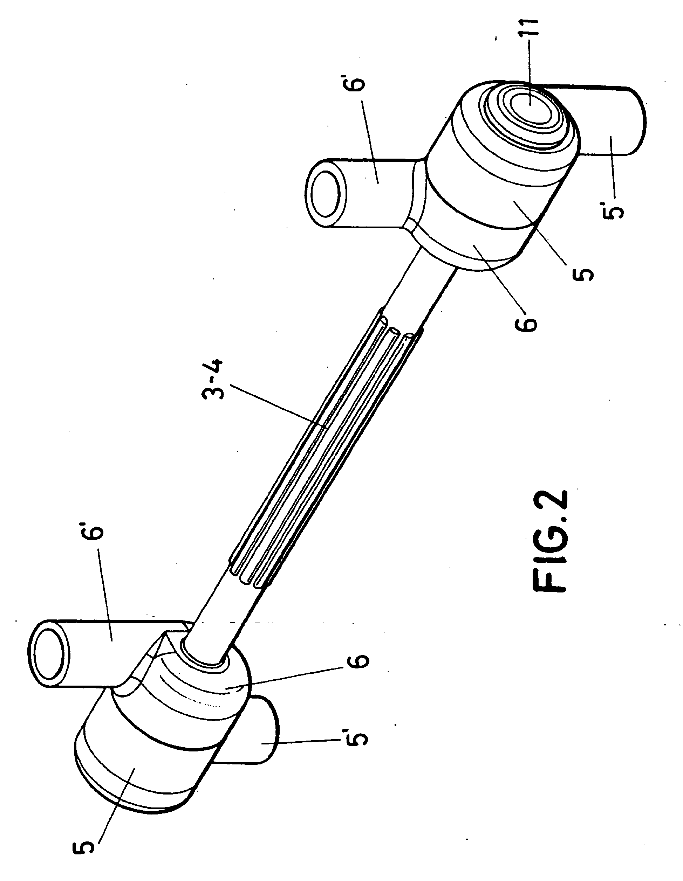

**Figure 2****.**- Shows a perspective view of the pieces of figure 1, in the assembled position.
**Figure 3****.**- Shows an application of the inventive handle on a shopping trolley in which the bag has been removed. This figure shows the handle in the position of use or unfolded, though the dashed lines show the handle in the folded or retracted position.

### DESCRIPTION OF THE PREFERRED FORM OF EMBODIMENT

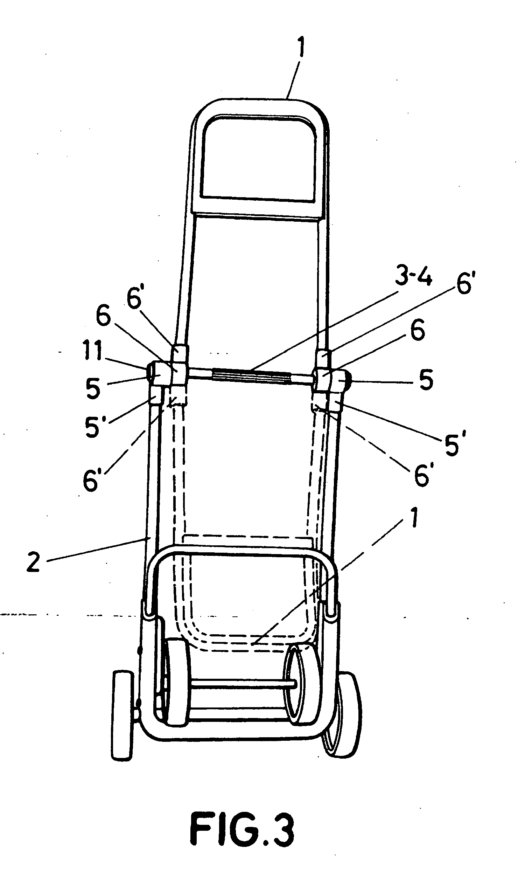

With the commented figures in view, the inventive handle consists, as is conventional, of an inverted "U" shaped bridge 1 intended for mounting in the corresponding frame 2 of a shopping trolley, as represented in figure 3, where the handle 1 is connected via the ends of its side arms to the upper ends of the actual frame 2 of the trolley.

So, starting from these characteristics, the inventive handle is characterised by incorporating a folding mechanism for said handle 1 with respect to the frame 2 of the trolley, this folding being based on the fact that the mounting on the frame 2 is done via a shaft 3 with a cover 4 whose surface determines the means of gripping, for which it is provided with projections and recesses that alternate with each other in the longitudinal direction, or even with annular projections and recesses.

In whatever case, the ends of the shaft 3-4 present individual pairs of pieces 5 and 6, the first of them provided for attachment to the frame 2 of the trolley, while the second is provided for coupling of the handle 1, the two pieces being connected together with the ability to be locked in order to keep the shaft 3-4 static in order to allow it to turn and thus the swivelling of the handle 1 as will be explained further below.

The coupling of the two pieces to the frame 2 of the trolley and to the "U" shaped bridge of the handle is done by means of the corresponding collars 5' and 6' which branch laterally from the pieces 5 and 6, respectively, for being coupled by means of plugging into the ends of the frame 2 and on the ends of the bridge 1 of the handle.

The pieces 5 remain fixed to the frame 2, while the pieces 6 are regarded as mobile, since they can turn with the shaft 3-4 in order to permit the folding or unfolding of the bridge of the handle 1.

When fitted, the two pieces 5 and 6 face each other via their respective casings 7 and 8, whose inner surface is toothed, the casing 8 of the mobile piece 6 having a greater depth in order to be able to house by itself a toothed wheel 9, while the casing 7 of the fixed piece 5 has a lesser depth and will only permit the partial housing of the toothed wheel 9. the latter being mounted between the two casings 7 and 8 and pushed towards the casing 7 of the fixed piece 5 by means of a spring 10 which rests via its other end in the bottom of the casing 8 of the mobile piece 6.

In this way, in the unfolded position of the handle the wheel 9 is engaged with both sets of teeth of the casings 7 and 8 and therefore locking the shaft 3-4 assembly with its pieces 6 with respect to the fixed pieces 5, a position that prevents the folding of the bridge of the handle 1 as a consequence of that engagement between the two pieces 5 and 6 and therefore making it impossible for the piece 6 to move with respect to the piece 5.

Nevertheless, when a button 11 provided axially in the fixed pieces 5 is pressed, which is done manually from the outside, this pressing of the buttons 11 entails pushing of the toothed wheel 9, releasing the latter from the casing 7 corresponding to the fixed piece 5, and becoming fully introduced into the casing 8 of the mobile piece 6, which means that the latter and therefore the shaft 3-4 linked to it are able to rotate with respect to the fixed piece 5 and therefore swivel to the retracted position of the bridge corresponding to the handle 1, in such a way that once the end buttons 11 have been pressed, the force of the spring 10 again displaces the toothed wheel 9 so that the latter simultaneously engages with the teeth of the casings 7 and 8, producing the locking of the corresponding pieces and therefore of the shaft 3-4.

## Claims

1. **FOLDING HANDLE FOR SHOPPING TROLLEY**, which, being of the type that consists of an inverted "U" shaped bridge mounted on the sides of the support frame for the bag corresponding to the actual trolley, mounted between the ends of the side arms of the inverted "U" shaped bridge of the handle (1) is a shaft (3) able to rotate in order to permit the folding of said handle (1) or to establish the locking of the actual unfolded handle (1) in the position of use; **characterised in that** the outside of the shaft (3) comprises a cover (4) with alternating projections and recesses defining non-slip means of gripping.

2. **FOLDING HANDLE FOR SHOPPING TROLLEY,** according to claim 1, **characterised in that** the shaft (3) of the handle (1) bears at each of its ends a pair of pieces (5 and 6), one of them (5) being coupled fixed to the sides of the frame (2) for the trolley, while the other (6) is coupled directly to the shaft (3) and on the ends of the sides corresponding to the handle (1): with provision having been made so that the two pieces (5 and 6) remain coupled together with the interposition of a toothed wheel (9) arranged in common in individual casings (7 and 8) with a toothed inner surface and provided in the facing parts of the two pieces (5 and 6), said toothed wheel (9) establishing a lock between said pieces (5 and 6) in the position of normal use of the handle (1), the toothed wheel (9) being likewise able to be displaced towards the piece (6) connected to the shaft (3) in order to release said piece (6) with respect to the fixed piece (5), permitting rotation of the shaft (3) and with it the folding of the handle (1).

3. **FOLDING HANDLE FOR SHOPPING TROLLEY,** according to claim 2, **characterised in that** the toothed wheel (9) is forced towards the position of common engagement with the casings (7 and 8) of the two pieces (5 and 6) by means of a spring (10) inserted between the actual toothed wheel (9) and the bottom of the casing (8) of the piece (6).

4. **FOLDING HANDLE FOR SHOPPING TROLLEY,** according to claim 3, **characterised in that** fitted axially to the fixed piece (5) for coupling of the frame (2) of the trolley is a button (11) that can be pushed manually from the outside in order to produce the displacement of the toothed wheel (9) towards the casing (8) of the piece (6) and the corresponding unlocking or release of said piece (6) and therefore of the shaft (3) with respect to the fixed piece (5).

5. **FOLDING HANDLE FOR SHOPPING TROLLEY,** according to claim 4, **characterised in that** the pieces (5 and 6) provided at each end of the swivelling shaft (3) of the handle (1) present a tubular side branching (5' and 6'), respectively, defining a coupling collar by means of plugging into the respective end of the side of the frame (2) for the trolley and of the bridge of the handle (1), respectively.

## Patentansprüche

1. Klappgriff für einen Einkaufswagen, der Art, dass er aus einer Brücke in Form eines umgedrehten U besteht und an den Seiten des Stützrahmens für die Tasche, was dem eigentlichen Wagen entspricht, angebracht ist, wobei zwischen den Enden der Seitenarme der Brücke in Form eines umgedrehten U des Griffs (1) eine Achse (3) ist, die in der Lage ist, zu drehen, um so das Klappen des Griffs (1) zu ermöglichen oder eine Arretierung des eigentlichen ausgeklappten Griffs (1) in der Verwendungsposition herzustellen, **dadurch gekennzeichnet, dass** die Außenseite der Achse (3) eine Abdeckung (4) mit sich abwechselnden Vorsprüngen und Vertiefungen, die ein Mittel zum nicht-gleitenden Greifen bilden, aufweist.

2. Klappgriff für einen Einkaufswagen gemäß Anspruch 1, **dadurch gekennzeichnet, dass** an jedem Ende der Achse (3) des Griffs (1) ein Teilepaar (5 und 6) gelagert ist, wobei eins davon (5) fest mit den Seiten des Rahmens (2) für den Wagen verbunden wird, wohingegen das andere (6) direkt mit der Achse (3) und an den Enden der dem Griff (1) entsprechenden Seiten verbunden wird; wobei vorgesehen wird,dass es so hergestellt ist, dass die beiden Teile (5 und 6) miteinander verbunden bleiben, wobei zwischen diese ein Zahnrad (9) zwischengesetzt ist, das damit zusammen in einzelnen Gehäusen (7 und 8) angeordnet ist, das eine gezahnte Innenfläche aufweist und in den sich gegenüberliegenden Teilen der beiden Teile (5 und 6) vorgesehen ist, wobei das Zahnrad (9) in der Position der normalen Verwendung des Griffs (1) eine Arretierung zwischen den beiden Teilen (5 und 6) erstellt, wobei das Zahnrad (9) gleichermaßen in der Lage ist, zu Teil (6) versetzt zu werden, das mit der Achse (3) verbunden ist, um das Teil (6) bezogen auf das feststehende Teil (5) freizusetzen, wodurch ein Drehen der Achse (3) und somit ein Klappen des Griffs (1) ermöglicht wird.

3. Klappgriff für einen Einkaufswagen gemäß Anspruch 2, **dadurch gekennzeichnet, dass** das Zahnrad (9) zur Position des gemeinsamen Eingreifens mit den Gehäusen (7 und 8) der beiden Teile (5 und 6) mittels einer Feder (10) gezwungen wird, die zwischen dem eigentlichen Zahnrad (9) und dem Boden des Gehäuses (8) des Teils (6) eingesetzt ist.

4. Klappgriff für einen Einkaufswagen gemäß Anspruch 3, **dadurch gekennzeichnet, dass** axial zu dem feststehenden Teil (5) zur Verbindung des Rahmens (2) des Wagens ein Knopf (11) eingepasst ist, der manuell von außen gedrückt werden kann, um das Versetzen des Zahnrads (9) zum Gehäuse (8) des Teils (6) zu bewirken und somit Teil (6) entsprechend zu lösen oder freizusetzen, und somit auch die Achse (3) bezogen auf das feststehende Teil (5).

5. Klappgriff für einen Einkaufswagen gemäß Anspruch 4, **dadurch gekennzeichnet, dass** die Teile (5 und 6), die an jedem Ende der drehbaren Achse (3) des Griffs (1) vorgesehen sind, jeweils einen rohrförmigen Seitenarm (5' und 6') bilden, der jeweils durch Einstecken in das entsprechende Ende der Seite des Rahmens (2) für den Wagen und der Brücke des Griffs (1) einen Verbindungskragen abgrenzt.

## Revendications

1. Poignée pliable pour chariot de supermarché qui, étant du type constitué d'un pont en forme de "U" inversé qui est monté sur les côtés du cadre de support de sac correspondant au chariot proprement dit, monté entre les extrémités des branches latérales du pont en forme de "U" inversé de la poignée (1), est un arbre (3) qui est capable de tourner dans le but de permettre le pliage de ladite poignée (1) ou d'établir le verrouillage de la poignée dépliée proprement dite (1) dans la position d'utilisation; **caractérisée en ce que** l'extérieur de l'arbre (3) comprend un recouvrement (4) qui comporte des saillies et des creux alternés qui définissent des moyens de prise antidérapants.

2. Poignée pliable pour chariot de supermarché selon la revendication 1, **caractérisée en ce que** l'arbre (3) de la poignée (1) porte à chacune de ses extrémités une paire de pièces (5 et 6), une (5) de celles-ci étant couplée fixement aux côtés du cadre (2) pour le chariot, alors que l'autre (6) est couplée directement à l'arbre (3) et sur les extrémités des côtés correspondants à la poignée (1); ledit agencement ayant été conçu de telle sorte que les deux pièces (5 et 6) restent couplées l'une à l'autre avec l'interposition d'une roue dentée (9) arrangée en commun dans des anneaux individuels (7 et 8) présentant une surface intérieure dentée et prévus dans les parties opposées des deux pièces (5 et 6), ladite roue dentée (9) établissant un verrouillage entre lesdites pièces (5 et 6) dans la position d'utilisation normale de la poignée (1), la roue dentée (9) pouvant de la même façon être déplacée en direction de la pièce (6) connectée à l'arbre (3) dans le but de libérer ladite pièce (6) par rapport à la pièce fixe (5), permettant la rotation de l'arbre (3) et avec celle-ci le pliage de la poignée (1).

3. Poignée pliable pour chariot de supermarché selon la revendication 2, **caractérisée en ce que** la roue dentée (9) est poussée en direction de la position d'engagement commun avec les anneaux (7 et 8) des deux pièces (5 et 6) au moyen d'un ressort (10) qui est inséré entre la roue dentée réelle (9) et le fond de l'anneau (8) de la pièce (6).

4. Poignée pliable pour chariot de supermarché selon la revendication 3, **caractérisée en ce qu'**un bouton (11) est agencé axialement sur la pièce fixe (5) pour coupler le cadre (2) du chariot, ledit bouton pouvant être enfoncé manuellement depuis l'extérieur pour produire le déplacement de la roue dentée (9) en direction de l'anneau (8) de la pièce (6) et le déverrouillage ou relâchement correspondant de ladite pièce (6) et par conséquent de l'arbre (3) par rapport à la pièce fixe (5).

5. Poignée pliable pour chariot de supermarché selon la revendication 4, **caractérisée en ce que** les pièces (5 et 6) prévues à chaque extrémité de l'arbre pivotant (3) de la poignée (1) présentent une ramification latérale tubulaire (5' et 6'), respectivement, qui définit un collier de couplage au moyen d'un branchement dans l'extrémité respective du côté du cadre (2) pour le chariot et du pont de la poignée (1), respectivement.
